# EUROPÄISCHE PATENTANMELDUNG

(11) **EP 4 231 505 A1**
(43) Veröffentlichungstag der Anmeldung: **23.08.2023**
(21) Anmeldenummer: 23154132.7
(22) Anmeldetag: 31.01.2023
(51) Int. Cl.: H02K 1/18, H02K 7/08

(54) **STATOR FÜR EINEN AUSSENLÄUFERMOTOR**

(30) Priorität: 18.02.2022 DE 102022103896
(71) Anmelder: ebm-papst Mulfingen GmbH & Co. KG, 74673 Mulfingen (DE)
(72) Erfinder: Walter, Manuel, 74523 Schwäbisch Hall (DE); Letter, Tobias, 74676 Niedernhall (DE)
(74) Vertreter: Staeger & Sperling Partnerschaftsgesellschaft mbB

(57) **Zusammenfassung**

Die Erfindung betrifft einen Stator (1) für einen Außenläufermotor mit einem Rotor, welcher durch zumindest ein Lager um eine den Stator von einer ersten Seite (A) zu einer zweiten Seite (B) durchlaufenden Rotationsachse (X) rotierbar an dem Stator (1) lagerbar ist, wobei der Stator (1) ein Statorpaket (10) und eine das Statorpaket (10) ummantelnde Umspritzung (20) aufweist, wobei das Statorpaket (10) eine Vielzahl von sich von einem radialinneren Bereich nach radialaußen erstreckende Statorzähne (11) und in dem radialinneren Bereich eine in Axialrichtung verlaufende Durchgangsöffnung (12) aufweist, wobei das Statorpaket (10) zumindest ein sich in Radialrichtung (R) in die Durchgangsöffnung (12) hineinerstreckendes Segment (13) ausbildet, welches in der Durchgangsöffnung (12) einen zu der ersten Seite (A) weisenden ersten Absatz (131) und/oder einen zu der zweite Seite (B) weisenden zweiten Absatz (132) bestimmt.

## Beschreibung

Die Erfindung betrifft einen Stator für einen als Außenläufermotor ausgebildeten Elektromotor sowie einen Außenläufermotor mit einem solchen Stator.

Aus dem Stand der Technik ist eine Vielzahl von Außenläufermotoren mit verschiedensten Statoren bekannt. Dabei ist bei Außenläufermotoren meist vorgesehen, dass ein um den Stator rotierbarer Rotor an einer koaxial zu einer Rotationsachse verlaufenden Motorwelle fixiert ist, welche durch zumeist zwei Lager an dem Stator gelagert ist.

Ein Stator weist ein Statorpaket auf, welches aus einer Vielzahl gleichförmiger, aufeinander gestapelter Bleche gebildet sein kann. Die Lager, meist Kugellager, liegen zur Lagerung des Rotors üblicherweise außerhalb des Statorpakets und weisen in Axialrichtung einen deutlichen Abstand zu dem Statorpaket auf.

Soll der Außenläufermotor kompakt aufgebaut werden, ist teilweise vorgesehen, eine das Statorpaket durchlaufende Durchgangsöffnung, durch welche hindurch die Motorwelle verläuft, so groß auszubilden, dass die Lager vollständig innerhalb der Durchgangsöffnung angeordnet werden können.

Da hierfür der Innendurchmesser des Statorpakets bzw. der Durchmesser der Durchgangsöffnung entsprechend groß ausgebildet werden muss, vergrößert sich auch der Außendurchmesser des Statorpakets und mithin der gesamte in Radialrichtung benötigte Bauraum des Elektromotors.

Zudem ist für die Lagerströme und das EMV-Verhalten des Elektromotors vorteilhaft, wenn die Kugellager zu dem Statorpaket beabstandet und elektrisch isoliert sind, was jedoch bei innerhalb des Statorpakets angeordneten Lagern oftmals nicht gewährleistet werden kann.

Der Erfindung liegt deshalb die Aufgabe zugrunde, die vorgenannten Nachteile zu überwinden und einen Stator für einen möglichst kompakt bauenden Außenläufermotor bereitzustellen, der jedoch zugleich ein vorteilhaftes EMV-Verhalten aufweist.

Diese Aufgabe wird durch die Merkmalskombination gemäß Patentanspruch 1 gelöst.

Erfindungsgemäß wird daher ein Stator für einen Außenläufermotor vorgeschlagen. Ein solcher Außenläufermotor weist einen Rotor auf, welcher durch zumindest ein Lager um eine den Stator von einer ersten Seite zu einer zweiten Seite durchlaufenden Rotationsachse rotierbar an dem Stator lagerbar ist. Der erfindungsgemäße Stator weist ein Statorpaket und eine das Statorpaket ummantelnde Umspritzung auf, wobei das Statorpaket eine Vielzahl von sich von einem radialinneren Bereich nach radialaußen erstreckende Statorzähne besitzt. In dem radialinneren Bereich ist eine das Statorpaket in Axialrichtung d.h. entlang der Rotationsachse durchlaufende Durchgangsöffnung angeordnet, durch welche hindurchverlaufend eine Motorwelle koaxial zur Rotationsachse angeordnet sein kann. Das Statorpaket bildet zumindest ein sich in Radialrichtung in die Durchgangsöffnung hineinerstreckendes Segment aus, welches in der Durchgangsöffnung einen zu der ersten Seite weisenden ersten Absatz und/oder einen zu der zweiten Seite weisenden zweiten Absatz bestimmt.

Der Durchmesser der Durchgangsöffnung ist vorzugsweise gleich oder größer dem Durchmesser des Lagers, wobei das zumindest eine Segment den Durchmesser der Durchgangsöffnung im Bereich der Segmente vorzugsweise auf einen Wert kleiner dem Durchmesser des Lagers reduziert, sodass die Lager in Axialrichtung durch die Segmente abgestützt werden können und vorzugsweise mittels einem in Axialrichtung zwischen diesen liegenden Abschnitt der Umspritzung aneinander anliegen.

Das Statorpaket kann also in seinem durch die Durchgangsöffnung bestimmten Innenbereich Absätze ausbilden, wodurch ein Abstand des Statorpakets zu dem Kugellager bzw. zu den Kugellagern vergrößert wird. Wird zusätzlich das Lager näher am Statorpaket angeordnet, kann der Elektromotor mit einem kompakteren Bauraum bei einem weiter ausreichend großen Abstand der Lager zu dem Statorpaket bereitgestellt werden. Dadurch wird die kapazitive Kopplung zwischen Statorpaket und Lager verringert, wodurch die Lagerströme und das EMV-Verhalten verbessert werden können.

In einer vorteilhaften Weiterbildung ist zudem vorgesehen, dass das zumindest eine Segment nach radialinnen d.h. zu der Rotationsachse hin zumindest abschnittsweise und insbesondere vollständig frei von der Umspritzung ist. Zusätzlich oder alternativ dazu kann auch vorgesehen sein, dass das zumindest eine Segment in Umfangsrichtung um die Rotationsachse zu einer Seite hin oder zu beiden Seiten hin zumindest abschnittweise und insbesondere vollständig frei von der Umspritzung ist. Bei der Fertigung des Stators können die von der Umspritzung isolierten Statorzähne mit einem Draht umwickelt und die so gebildeten Wicklungen umpresst werden. Bei einem Umpressen des gewickelten und verschalteten Stators können durch die von der Umspritzung freien Bereiche des Statorpakets Reste von Stanzölen oder Ausgasungen des Kunststoffs entweichen, sodass es nicht zu einer Blasenbildung auf einer Mantelfläche des umpressten Stators kommt. Beim Umspritzen des Statorpakets kann dieses zudem insbesondere an den in Umfangsrichtung freien Abschnitten in einem Werkzeug zum Umspritzen des Statorpakets ausgerichtet werden.

Ein Abschnitt der Durchgangsöffnung zwischen den Segmenten oder in Umfangsrichtung weisende Seitenflächen der Segmente können jedoch von der Umspritzung bedeckt werden. Das ist auch deshalb vorteilhaft, da ein Werkzeug zur Umspritzung des Statorpakets, bei welchem in der Durchgangsöffnung freie Bereiche vorgesehen sind, ohne zusätzliche Schieber realisiert werden kann.

Eine vorteilhafte Variante sieht zudem vor, dass das zumindest eine Segment in Axialrichtung insbesondere vollständig von der Umspritzung abgedeckt ist und somit die Anlagefläche zur axialen Anlage an das Lager bildet, wodurch die Erhöhung des Abstands des Statorpakets zu dem Lager weiter sichergestellt werden kann.

Zudem kann vorgesehen sein, dass die Umspritzung in Axialrichtung angrenzend an das zumindest eine Segment eine Lageraufnahme zur Aufnahme des Lagers bildet. Vorzugsweise bildet die Umspritzung eine erste Lageraufnahme in Axialrichtung zu der ersten Seite und eine zweite Lageraufnahme zu der zweiten Seite hin. Die jeweilige Lageraufnahme kann insbesondere zu der jeweils zugeordneten Seite hin offen sein, sodass das jeweilige Lager in Axialrichtung entlang der Rotationsachse in die zugehörige Lageraufnahme eingeschoben werden kann.

Die Lageraufnahme weist bzw. die erste und/oder zweite Lageraufnahmen weisen in Axialrichtung angrenzend an das zumindest eine Segment eine durch die Umspritzung gebildete Auflagefläche zur axialen Anlage an das Lager auf.

Gemäß einer vorteilhaften Weiterbildung, ist insbesondere zu der ersten und zweiten Seite des Stators hin jeweils eine Auflagefläche je Segment in axialer Verlängerung des jeweiligen Segments vorgesehen.

Die Auflagefläche kann in Axialrichtung innerhalb der Durchgangsöffnung liegen, sodass entsprechend auch das jeweilige Lager zumindest zum Teil innerhalb der Durchgangsöffnung angeordnet ist. Alternativ kann die Auflagefläche in einer ersten Ebene mit einer durch die Umspritzung gebildeten zu der ersten Seite oder der zweiten Seite des Stators gewandten Wickelfläche liegen. Weiter kann die Auflagefläche in einer zweiten Ebene mit einer zu der ersten Seite oder der zweiten Seite gewandten Stirnseite des Statorpakets liegen. Alternativ liegt die Auflagefläche zwischen der ersten Ebene und der zweiten Ebene. Durch jede der genannten Positionierungen der Auflagefläche ist ein in seinem Bauraum optimierter Stator bzw. Elektromotor erreichbar, da die Lager entweder unmittelbar am Statorpaket oder zumindest teilweise in dem Statorpaket angeordnet werden können.

Im Stand der Technik ist meist vorgesehen, dass Statorpaket aus einer Vielzahl gleichartiger und gleichförmiger Bleche zu bilden. Davon abweichend wird gemäß einer vorteilhaften Weiterbildung vorgeschlagen, dass das Statorpaket aus in Axialrichtung gestapelten Blechen zumindest erster Form und zweiter Form gebildet ist. Die Bleche erster Form bilden dabei einen ersten Abschnitt des Statorpakets mit dem zumindest einen Segment und die Bleche zweiter Form bilden einen daran in Axialrichtung angrenzenden zweiten bzw. weiteren Abschnitt des Statorpakets. Vorzugsweise bilden die Bleche zweiter Form sowohl einen in Axialrichtung zu der ersten Seite des Stators hin an den ersten Abschnitt angrenzenden zweiten Abschnitt als auch einen in Axialrichtung zu der zweiten Seite des Stators hin an den ersten Abschnitt angrenzenden dritten Abschnitt. Weiter können auch Bleche in drei Formen vorgesehen sein, wobei beispielsweise Bleche erster Form den ersten Abschnitt, Bleche zweiter Form den zweiten Abschnitt und Bleche dritter Form den dritten Abschnitt bilden.

Sind mehrere Segmente vorgesehen, kann jeweils ein Segment je Statorzahn oder jeweils ein Segment je zwei Statorzähne vorgesehen sein. Zusätzlich oder alternativ dazu können die Segmente in Umfangsrichtung zueinander beabstandet sein, sodass also in Umfangsrichtung zwischen je zwei Segmenten eine insbesondere zu der Rotationsachse hin offene Ausnehmung vorgesehen ist. Ferner können die Segmente jeweils symmetrisch zu einem jeweils zugeordneten Statorzahn bzw. symmetrisch zu einer dem jeweiligen Statorzahn zugeordneten Symmetrieebene ausgebildet sein. Vorzugsweise erstrecken sich die Segmente zudem in Verlängerung eines jeweils zugeordneten Statorzahns nach radialinnen.

Die Umspritzung kann in der Durchgangsöffnung zudem zwischen zwei Segmenten eine sich in Axialrichtung erstreckende Indexrippe bilden, welche sich insbesondere zu der ersten Seite und/oder der zweiten Seite hin eine Einführschräge bildend verjüngt. Eine solche Indexrippe kann insbesondere zwischen zwei Segmenten angeordnet sein, welche jeweils einen in Umfangsrichtung zu der Indexrippe hin von der Umspritzung freien Bereich aufweisen. Durch die Indexrippe kann der Stator bzw. eine Winkellage des Stators beim Wickeln eines Drahtes um die Statorzähne indiziert werden.

Ein weiterer Aspekt der Erfindung betrifft zudem ein Außenläufermotor mit einem erfindungsgemäßen Stator sowie mit einem Rotor. Der Rotor ist mit zumindest einem Lager um eine den Stator von einer ersten Seite zu einer zweiten Seite durchlaufenden Motorwelle rotierbar an dem Stator gelagert. Das zumindest eine Lager ist in Axialrichtung angrenzend an das zumindest eine Segment in einer durch die Umspritzung gebildeten Lageraufnahme angeordnet.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: Statorpaket eines Stators;
- Fig. 2: Längsschnitt durch das Statorpaket;
- Fig. 3: Längsschnitt durch den das Statorpaket aufweisenden Stator.

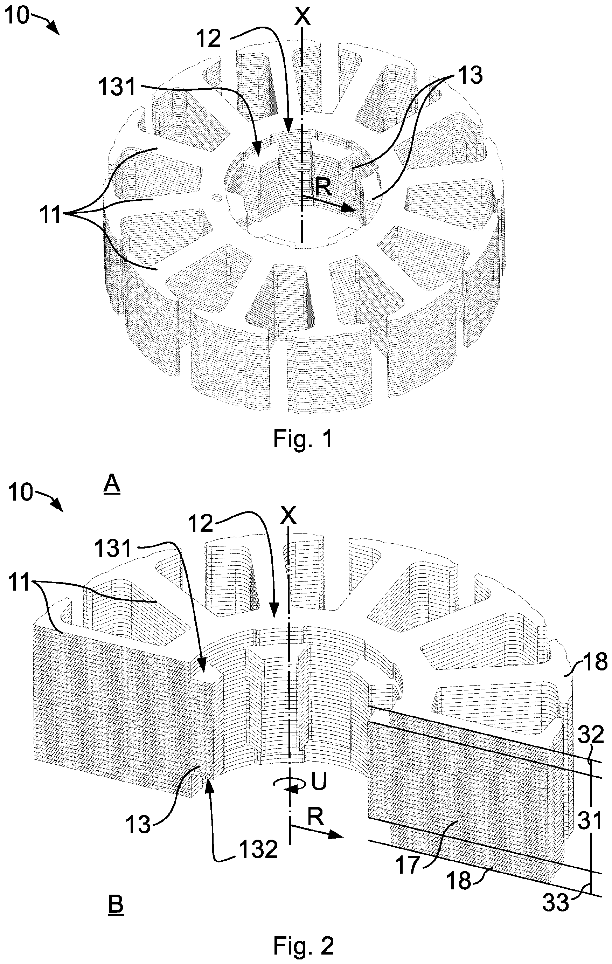

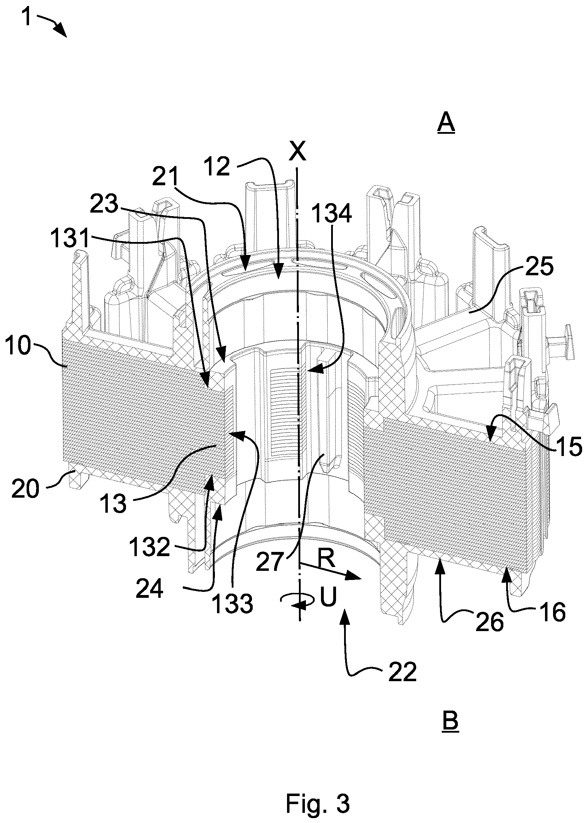

Die Figuren sind beispielhaft schematisch. Gleiche Bezugszeichen in den Figuren weisen auf gleiche funktionale und/oder strukturelle Merkmale hin. Figur 2 zeigt einen Längsschnitt durch das Statorpaket 10 gemäß Figur 1. In Figur 3 ist zudem ein Stator 1 bzw. ein mit einer Umspritzung 20 umspritztes Statorpaket 10 gemäß den Figuren 1 und 2 dargestellt.

Die Beschreibung bezieht sich daher zugleich auf alle Figuren, wobei der Übersichtlichkeit halber nicht alle Bezugszeichen in allen Figuren verwendet werden.

Das Statorpaket 10 weist vorliegend und rein beispielhaft zwölf Statorzähne 11 auf, welche sich von einem radialinneren Bereich um die Rotationsachse X in Radialrichtung R nach radialaußen erstrecken.

In dem radialinneren Bereich um die Rotationsachse X durchläuft eine Durchgangsöffnung 12 das Statorpaket 10 in Axialrichtung d.h. entlang der Rotationsachse X vollständig.

Das Statorpaket 10 wird mit Kunststoff umspritzt und dadurch die Umspritzung 20 gebildet, welche entsprechend auch beispielsweise als Mantel bezeichnet werden kann. Die Umspritzung 20 bildet dabei die Lageraufnahmen 21, 22 in welche jeweils ein Lager zur Lagerung einer Motorwelle bzw. zur Lagerung eines Rotors eingeschoben werden kann.

Um einen in Axialrichtung geringen Bauraumbedarf zu erreichen, müssen die Lageraufnahmen und damit die Lager möglichst nah oder zumindest teilweise innerhalb des Statorpakets 10 ausgebildet werden. Daher ist vorgesehen, dass die Durchgangsöffnung 12 durch das Statorpaket 10 einen Durchmesser gleich oder größer dem Außendurchmesser der Lager aufweist und das Statorpaket 10 sich in die Durchgangsöffnung 12 hineinerstreckende Segmente 13 ausbildet, durch welche der Durchmesser der Durchgangsöffnung 12 in diesem Bereich auf einen Wert kleiner dem Außendurchmesser der Lager reduziert wird. Dadurch wird zu der ersten Seite A hin ein erster Absatz 131 und zu der zweiten Seite B hin ein zweiter Absatz 132 innerhalb der Durchgangsöffnung gebildet. Alternativ können die Durchmesser der Durchgangsöffnung 13 auch dadurch beschrieben werden, dass der Innendurchmesser der Durchgangsöffnung 12 im axialen Bereich der Segmente 13 kleiner ist als der Außendurchmesser des Lagers und dass der Innendurchmesser der Durchgangsöffnung 12 axialangrenzend an die Segmente 13, d.h. im Bereich der Absätze 131, 132 gleich oder größer dem Außendurchmesser der Lager ist.

Obwohl grundsätzlich auch lediglich ein Segment 13 vorgesehen sein kann, welches die Rotationsachse X vollständig oder im Wesentlichen vollständig umläuft, ist vorliegend vorgesehen, dass sich jeweils ein Segment 13 in Verlängerung jedes zweiten Statorzahns 11 in die Durchgangsöffnung 12 hinein erstreckt. Für je zwei Statorzähne 11 ist also ein Segment 13, d.h. sechs Segmente 13 vorgesehen.

Das Statorpaket 10 ist vorliegend durch eine Vielzahl von aufeinander gestapelten Blechen erster Form 17 und zweiter Form 18 gebildet, wobei grundsätzlich Bleche mit weiteren Formen möglich sind. Bei dem dargestellten Beispiel bilden die Bleche erster Form 17 zugleich die Segmente 13. Dadurch bestimmten die Bleche erster Form 17 in Axialrichtung einen ersten Abschnitt 31 des Statorpakets 10, in welchem sich die Segmente 13 nach radialinnen erstrecken, und die Bleche zweiter Form 18 einen daran in Axialrichtung angrenzenden zweiten und dritten Abschnitt 32, 33.

Wie in Figur 3 zu sehen, können die Lageraufnahmen 21, 22 bzw. deren Auflageflächen 23, 24, an welchen das jeweilige Lager in Axialrichtung anliegt somit nahe dem Statorpaket 10 ausgebildet werden, wobei durch die jeweiligen Absätze 131, 132 weiterhin ein ausreichender axialer Abstand zu dem Statorpaket 10 gewahrt bleibt. Die Auflageflächen 23, 24 sind bei dem dargestellten Beispiel jeweils zwischen einer stirnseitigen durch das Statorpaket 10 bestimmten Ebene 15, 16 und einer durch die Umspritzung 20 gebildeten stirnseitigen Wickelfläche 25, 26 angeordnet.

Die Segmente 13 sind nach radialinnen frei von der Umspritzung 20. Bei einem späteren Umpressen des gesamten Stators 1 kann die Umspritzung 20 in diesen nach radialinnen freien Bereichen 133 ausgasen. Da die das Statorpaket 20 bildenden Belche 17, 18 für gewöhnlich gestanzt werden, kann an den nach radialinnen freien Bereichen 133 auch eventuell noch vorhandenes Stanzöl entweichen.

Ferner sind zumindest zwei Segmente 13 als Paar ausgebildet, welche an ihren in Umfangsrichtung U zueinander gewandten Flächen einen in Umfangsrichtung U von der Umspritzung 20 freien Bereich 134 aufweisen. Die in Umfangsrichtung U freien Bereiche können dabei der Ausrichtung des Statorpakets 10 in einem Werkzeug zur Umspritzung des Statorpakets 10 mit der Umspritzung 20 dienen. In dem zwischen diesen zwei Segmenten 13 in Umfangsrichtung U liegenden Zwischenraum wird durch die Umspritzung 20 zudem eine Indexrippe 27 gebildet, welche der Indexierung der Winkellage des Stators 1 beim Wickeln von Drähten um die Statorzähne 10 dienen kann.

## Patentansprüche

1. Stator (1) für einen Außenläufermotor mit einem Rotor, welcher durch zumindest ein Lager um eine den Stator von einer ersten Seite (A) zu einer zweiten Seite (B) durchlaufenden Rotationsachse (X) rotierbar an dem Stator (1) lagerbar ist,
wobei der Stator (1) ein Statorpaket (10) und eine das Statorpaket (10) ummantelnde Umspritzung (20) aufweist,
wobei das Statorpaket (10) eine Vielzahl von sich von einem radialinneren Bereich nach radialaußen erstreckende Statorzähne (11) und in dem radialinneren Bereich eine in Axialrichtung verlaufende Durchgangsöffnung (12) aufweist,
**dadurch gekennzeichnet, dass**
das Statorpaket (10) zumindest ein sich in Radialrichtung (R) in die Durchgangsöffnung (12) hineinerstreckendes Segment (13) ausbildet, welches in der Durchgangsöffnung (12) einen zu der ersten Seite (A) weisenden ersten Absatz (131) und/oder einen zu der zweite Seite (B) weisenden zweiten Absatz (132) bestimmt.

2. Stator nach Anspruch 1,
wobei das zumindest eine Segment (13) nach radialinnen an einem in Radialrichtung (R) freien Bereich (133) zumindest abschnittsweise und insbesondere vollständig frei von der Umspritzung (20) ist und/oder
wobei das zumindest eine Segment (13) in Umfangsrichtung (U) an einem in Umfangsrichtung (U) freien Bereich (134) zumindest abschnittweise und insbesondere vollständig frei von der Umspritzung (20) ist.

3. Stator nach Anspruch 1 oder 2,
wobei das zumindest eine Segment (13) in Axialrichtung insbesondere vollständig von der Umspritzung (20) abgedeckt ist.

4. Stator nach einem der vorhergehenden Ansprüche,
wobei die Umspritzung (20) in Axialrichtung angrenzend an das zumindest eine Segment (13) eine Lageraufnahme (21, 22) zur Aufnahme des Lagers bildet
und die Umspritzung (20) insbesondere eine erste Lageraufnahme (21) in Axialrichtung zu der ersten Seite (A) und eine zweite Lageraufnahme (22) zu der zweiten Seite (B) hin bildet.

5. Stator nach dem vorhergehenden Anspruch,
wobei die Lageraufnahme (21, 22) in Axialrichtung angrenzend an das zumindest eine Segment (13) eine durch die Umspritzung (20) gebildete Auflagefläche (23, 24) zur Anlage an das Lager aufweist.

6. Stator nach dem vorhergehenden Anspruch
wobei jeweils eine Auflagefläche (23, 24) je Segment (13) in axialer Verlängerung des jeweiligen Segments (13) vorgesehen ist.

7. Stator nach Anspruch 5 oder 6,
wobei die Auflagefläche (23, 24) in Axialrichtung innerhalb der Durchgangsöffnung (12) liegt oder
die Auflagefläche (23, 24) in einer ersten Ebene mit einer durch die Umspritzung (20) gebildeten zu der ersten Seite (A) oder der zweiten Seite (B) gewandten Wickelfläche (25, 26) liegt oder
die Auflagefläche (23, 24) in einer zweiten Ebene mit einer zu der ersten Seite (A) oder der zweiten Seite (B) gewandten Stirnseite des Statorpakets (15, 16) liegt oder
die Auflagefläche (23, 24) zwischen der ersten Ebene und der zweiten Ebene liegt.

8. Stator nach einem der vorhergehenden Ansprüche,
wobei das Statorpaket (10) aus in Axialrichtung gestapelten Blechen erster Form (17) und zweiter Form (18) gebildet ist,
wobei die Bleche erster Form (17) einen ersten Abschnitt (31) des Statorpakets (10) mit dem zumindest einen Segment (13) und die Bleche zweiter Form (18) einen daran in Axialrichtung angrenzenden weiteren Abschnitt (32,33) des Statorpakets (20) bilden.

9. Stator nach einem der vorhergehenden Ansprüche,
wobei jeweils ein Segment (13) je Statorzahn (11) oder jeweils ein Segment (13) je zwei Statorzähne (11) vorgesehen ist und/oder die Segmente (13) in Umfangsrichtung (U) zueinander beabstandet sind und/oder die Segmente (13) jeweils symmetrisch zu einem jeweils zugeordneten Statorzahn (11) ausgebildet sind und/oder die Segmente (13) sich in Verlängerung eines jeweils zugeordneten Statorzahns (11) nach radialinnen erstrecken.

10. Stator nach einem der vorhergehenden Ansprüche,
wobei die Umspritzung (20) in der Durchgangsöffnung (12) zwischen zwei Segmenten (13) eine sich in Axialrichtung erstreckende Indexrippe (27) bildet, welche sich insbesondere zu der ersten Seite (A) und/oder der zweiten Seite (B) hin eine Einführschräge bildend verjüngt.

11. Außenläufermotor mit einem Stator (1) gemäß einem der vorhergehenden Ansprüche und einem Rotor, wobei der Rotor mit zumindest einem Lager um eine den Stator (1) von der ersten Seite (A) zu der zweiten Seite (B) durchlaufenden Motorwelle rotierbar an dem Stator (1) gelagert ist, wobei das Lager in Axialrichtung angrenzend an das zumindest eine Segment (13) in einer durch die Umspritzung (20) gebildeten Lageraufnahme (21, 22) angeordnet ist.
